# EUROPEAN PATENT APPLICATION

(11) **EP 0 701 106 A1**
(43) Date of publication of application: **13.03.1996**
(21) Application number: 95305776.7
(22) Date of filing: 18.08.1995
(51) Int. Cl.: G01C 21/20

(54) **Vehicle navigation system with upgradeable navigation software and a flexible memory configuration**

(30) Priority: 19.08.1994 US 293856
(71) Applicant: Zexel Corporation, Shibuya-ku Tokyo (JP)
(72) Inventor: Fujii, Takao, Cupertino, California 95014 (US)
(74) Representative: Hill, Richard

(57) **Abstract**

A vehicle navigation system includes a CPU which has an associated CPU memory space. The CPU is operable to begin executing code at an absolute address within the CPU memory space. A primary memory is coupled to the CPU which occupies a first memory space within the CPU memory space, the first memory space including the absolute address. The system also includes a removable secondary memory which occupies a second memory space within the CPU memory space. An interface to which the secondary memory is removably coupled is coupled to the CPU. The interface is for facilitating communication between the CPU and the secondary memory. Finally, means are provided for switching the first and second memory spaces within the CPU memory space so that the second memory space includes the absolute address. In a more specific embodiment. the vehicle navigation system includes a database medium for storing a map database and an upgraded navigation code. In one embodiment, the first navigation code is replaced in the primary memory with the upgraded navigation code from the database memory when the vehicle navigation system is booted up and the first navigation code is a different version than the upgraded navigation code. In another embodiment, the system prompts the user with the option of upgrading the navigation software when different versions are detected.

## Description

### BACKGROUND OF THE INVENTION

The present invention relates to a vehicle navigation system. More specifically, the present invention provides a flexible memory configuration for a vehicle navigation system in which the navigation software code is easily upgraded and by which alternate operational modes are facilitated.

Vehicle navigation systems have been improving in accuracy and sophistication to the point where they may soon become standard features throughout the automotive industry. For this to occur, however, the cost of such systems must be maintained at a reasonable level. One way of achieving this goal is to minimize the cost of upgrading the navigation software which controls the system.

The time required for the development of navigation software is generally different than the time required for the development of the system hardware. Often, several iterations of the navigation software code are desirable even after the system hardware design is complete. In the past, this has presented a problem in that previous systems have been designed with the navigation software stored in an erasable programmable read-only memory (EPROM). When it became necessary to upgrade the navigation software, the EPROM had to be removed from the system, reprogrammed and then replaced. Not only is this time consuming and labor intensive, it generally must be done by the manufacturer, adding another level of inconvenience to the end user of the vehicle navigation system.

Another disadvantage of previous vehicle navigation systems which increases overall system cost is the difficulty of testing the system both during production and in the field. Previous systems did not have an easy and efficient way to gather data on a particular system's operation. Neither did they have the capability to easily adapt test procedures to meet particular testing conditions, or the specific needs of a particular user.

Thus, it is desirable to employ a memory configuration which allows the navigation software to be upgraded by the user without the necessity of removing the memory in which the navigation software is stored from the system. It is also desirable that the memory configuration facilitate production testing, data gathering, and field maintenance functions in a manner which makes these functions both more flexible and cost effective.

### SUMMARY OF THE INVENTION

According to the present invention, a vehicle navigation system is provided which facilitates the upgrading of the navigation software code. The primary memory in which the navigation code is stored is reprogrammable non-volatile memory such as flash, ferro-electric random access memory, or random access memory with back-up power such as SRAM, DRAM, or pseudo SRAM. The system is also provided with an interface into and from which various types of memory cards may be inserted and removed. A database medium containing a map database and the latest version of the navigation software is also included in the system. When the system is booted up using a boot program stored in the primary memory, the central processing unit (CPU) determines whether the version of navigation software on the database medium is more recent than the version stored in the primary memory. In one embodiment, if the version on the database medium is more recent, it is automatically loaded into the primary memory. In another embodiment, when the CPU determines that the navigation software on the database medium is more recent, the system asks the user whether it should update the navigation software, or whether it should continue to use the software currently stored in the primary memory. In some embodiments, the database medium may comprise a hard disk memory card which is inserted into the interface. One or more secondary memory cards which serve a variety of functions may also be inserted into the interface. For example, a secondary memory card may contain diagnostic software for testing and/or troubleshooting the vehicle navigation system. A secondary memory card may also contain non-navigation software such as travelogues for a particular geographic area or game programs. The present invention switches the memory space occupied by the secondary memory with that of the primary memory and the CPU executes the code in the secondary memory as if it were the code in the primary memory. A secondary memory card may also be used for data logging purposes and enhanced navigation modes during normal operation of the system. In this case, the memory space switch is not done, but the CPU still has access to the information in the secondary memory.

According to a specific embodiment of the invention, a vehicle navigation system is provided which includes a CPU which has an associated CPU memory space. The CPU is operable to begin executing code at an absolute address within the CPU memory space. A primary memory is coupled to the CPU which occupies a first memory space within the CPU memory space which includes the absolute address. The system also includes a removable secondary memory which occupies a second memory space within the CPU memory space. An interface to which the secondary memory is removably coupled is coupled to the CPU. The interface is for facilitating communication between the CPU and the secondary memory. Finally, means are provided for switching the first and second memory spaces within the CPU memory space so that the second memory space includes the absolute address. In a more specific embodiment, the vehicle navigation system includes a database medium for storing a map database and an upgraded navigation code. In one embodiment, the first navigation code is replaced in the primary memory with the upgraded navigation code from the database memory when the vehicle navigation system is booted up and the first navigation code is a different version than the upgraded navigation code. In another embodiment, the system prompts the user with the option of upgrading the navigation software when different versions are detected.

A further understanding of the nature and advantages of the present invention may be realized by reference to the remaining portions of the specification and the drawings.

### BRIEF DESCRIPTION OF THE DRAWINGS

Fig. 1 is a block diagram of a specific embodiment of a vehicle navigation system for use with the present invention;
Fig. 2 is an illustration of the memory configuration of one embodiment of the invention;
Fig. 3A is a flowchart representing the beginning of normal system operation according to one embodiment of the present invention;
Fig. 3B is a flowchart representing the beginning of normal system operation according to another embodiment of the present invention;
Fig. 4 is a memory space diagram illustrating the difference between normal addressing mode and swap addressing mode;
Figs. 5A and 5B show a first embodiment of the switching means of Fig. 1;
Figs. 6A and 6B show a second embodiment of the switching means of Fig. 1;
Figs. 7A and 7B show a third embodiment of the switching means of Fig. 1;
Fig. 8 illustrates the memory configuration for data logging operation;
Fig. 9 illustrates the memory configuration for the initial loading of the main memory;
Fig. 10 illustrates the memory configuration for diagnostic operation;
Fig. 11 illustrates the memory configuration for execution of other non-navigation software; and
Fig. 12 illustrates the memory configuration for an enhanced navigation mode.

### DESCRIPTION OF THE PREFERRED EMBODIMENT

The present invention relates generally to commonly assigned, copending United States patent applications for CALIBRATION METHOD FOR A RELATIVE HEADING SENSOR, Serial No. 07/883,859 filed on May 15, 1992, ROUTE GUIDANCE ON/OFF-ROUTE STATE FILTER, Serial No. 07/884,749 filed on May 15, 1992, POSITION CORRECTION METHOD FOR VEHICLE NAVIGATION SYSTEM, Serial No. 08/000,950 filed on January 5, 1993, and METHOD FOR SELECTING A DESTINATION IN A VEHICLE NAVIGATION SYSTEM, Serial No. 08/099,207 filed on July 29, 1993, the entire specifications of which are incorporated herein by reference.

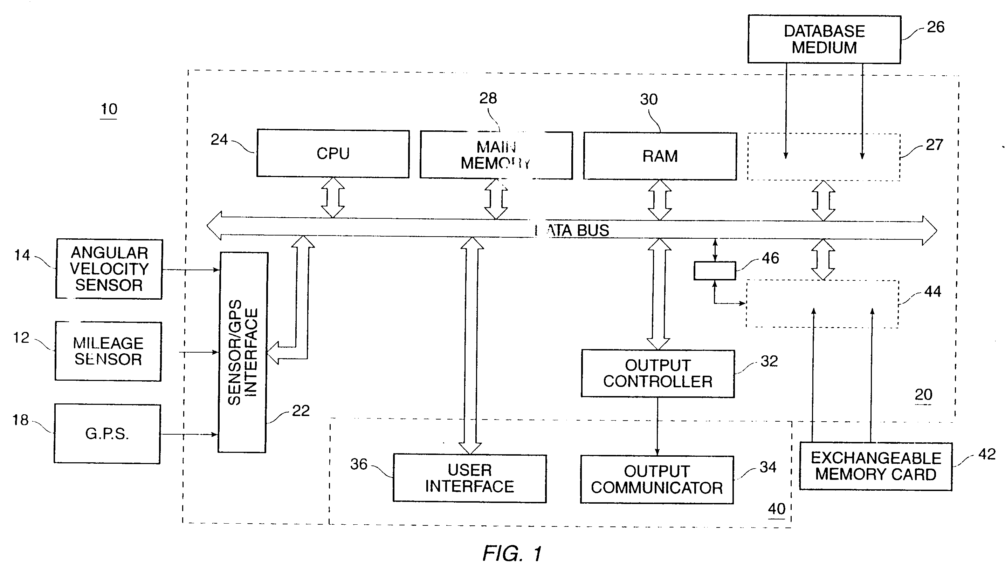

Fig. 1 is a block diagram of a specific embodiment of a vehicle navigation system 10 for use with the present invention. Sensors 12 and 14 and GPS receiver 18 are coupled to computing means 20 through sensor/GPS interface 22. In typical embodiments, the mileage sensor 12 comprises an odometer, and the angular velocity sensor 14 comprises a gyroscope, or a differential odometer coupled to the wheels of the vehicle. A global positioning system (GPS) data receiver 18 is provided for receiving signals from, for example, a satellite-based navigation system. Data from sensor/GPS interface 22 is transmitted to CPU 24, which performs calibration, signal processing, dead-reckoning, vehicle positioning, and route guidance functions. A database containing map information may be stored in database medium 26, with software directing the operation of computing means 20 stored in main memory 28 for execution by CPU 24. Memory 28 may comprise reprogrammable non-volatile memory such as flash memory or SRAM. System RAM 30 permits reading and writing of the information necessary to execute such software programs. Database medium 26 may comprise non-volatile memory, a hard disk drive, CD-ROM, or an integrated circuit onto which digitized map information has been stored. In one embodiment of the invention, database medium 26 comprises a removable hard disk card which inserts into interface slot 27. Output controller 32, which may comprise a graphics controller, receives data processed by CPU 24 and transmits such data to display console 40 which includes output communicator 34, usually comprising a display screen. The user may input data, such as a desired destination, through user interface 36, typically comprising a keyboard. The system also comprises an exchangeable memory 42 for insertion into interface slot 44, the purpose of which will be discussed below.

The map data base stored in database medium 26 preferably comprises positional data such as, for example, latitude and longitude coordinates, to describe road intersections, road segments, landmarks and points of interest, and other geographical information. The data base may further comprise data representing characteristics of roads or places on the map, such as road and place names, road features such as dividers, one-way restrictions, surface, speed limit, shape, elevation, and other properties. Using the data stored in the map data base, the vehicle navigation system generates one or more possible positions of the vehicle by comparing the dead-reckoned position to the road segments, intersections, and other geographical locations stored in the data base. The system then filters the set of position possibilities and selects from the remaining position possibilities a position deemed to be the current position of the vehicle.

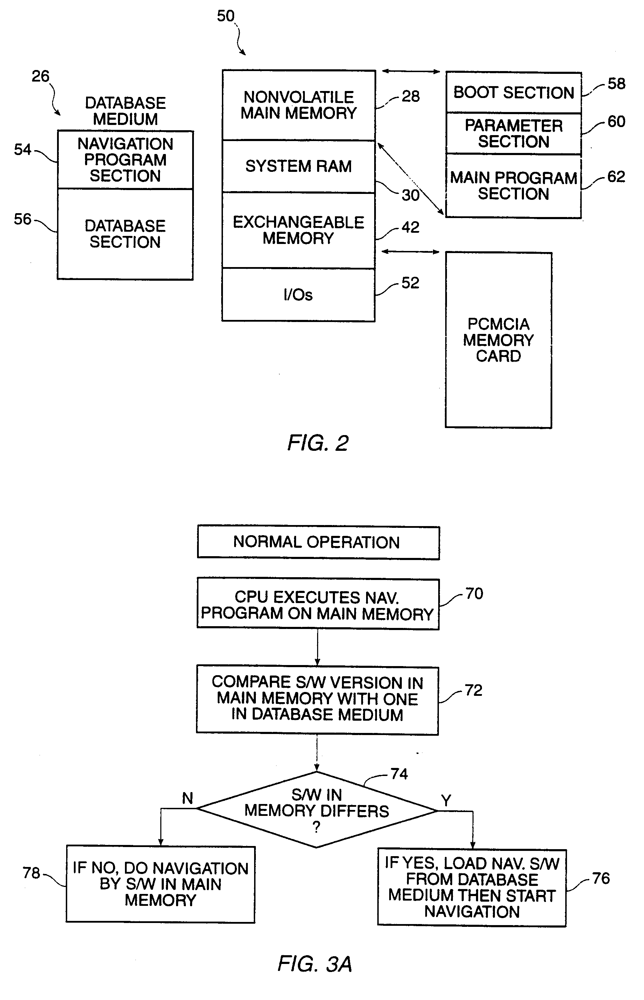

The basic memory configuration of one embodiment of the present invention is shown in Fig. 2. CPU memory space 50 includes memory spaces occupied by non-volatile main memory 28, system RAM 30, exchangeable memory 42, and I/O devices 52. Non-volatile main memory 28 may comprise flash memory or static random access memory (SRAM). Exchangeable memory 42 may comprise a Personal Computer Memory Card International Association (PCMCIA) memory card. The PCMCIA was formed to promote a standard for 68-pin integrated circuit cards which governs both data storage (memory) cards and peripheral expansion (I/O) cards. The system also includes a database medium 26 which stores the latest version of the navigation software in navigation program section 54, and a map database in database section 56. As mentioned above, database medium 26 may comprise a hard disk memory card.

At boot-up, most CPUs begin executing code in their memory space at a particular absolute address, the location of which varies depending upon the type of CPU employed. For example, Intel 86XX CPUs boot from the "top" of the CPU memory space while Motorola 68XXX CPUs boot from the "bottom" of the CPU memory space. In one embodiment of the invention, the system CPU begins executing code from an absolute address in CPU memory space 50 which, during normal operating conditions, coincides with an address in the memory space occupied by non-volatile main memory 28. Main memory 28 includes boot section 58, parameter section 60, and main program section 62. Normally, when the system is powered up, the CPU begins executing code beginning at boot section 58 of main memory 28. The CPU then executes code in main program section 62 (parameter section 60 generally stores non-executable data). The start of normal operation according to one embodiment of the invention is shown in the flowchart of Fig. 3A. When the CPU begins execution of the navigation program stored In main program section 62 (step 70), the navigation software in main memory 28 is compared with navigation software in database medium 26 (step 72). If the navigation software in main memory 28 is a different version (step 74), the CPU loads the version from database medium 26 to main memory 28 and begins navigating (step 76). Otherwise, the CPU begins navigating using the software already in main memory 28 (step 78).

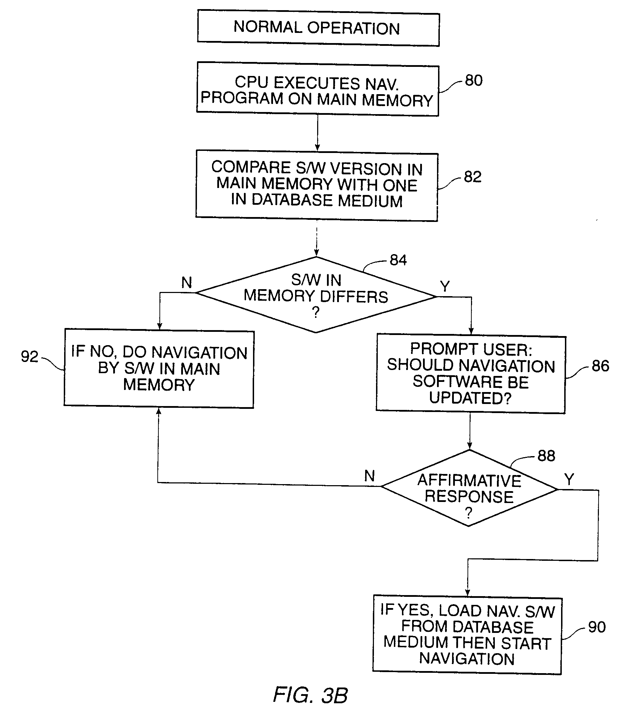

The start of normal operation according to another embodiment is represented by the flowchart of Fig. 3B. When the CPU begins execution of the navigation program stored in main program section 62 (step 80), the navigation software In main memory 28 is compared with navigation software in database medium 26 (step 82). If the navigation software in main memory 28 is a different version (step 84), the CPU asks the user of the system whether it should update the software in the main memory 28 (step 86). If the user responds affirmatively (step 88), the CPU loads the version from database medium 26 to main memory 28 and begins navigating (step 90). If the user does not respond affirmatively, the CPU begins navigating using the software already in main memory 28 (step 92). If the navigation software in main memory 28 is not different than the version in database medium 28, the CPU also begins navigating using the software in main memory 28 (step 92).

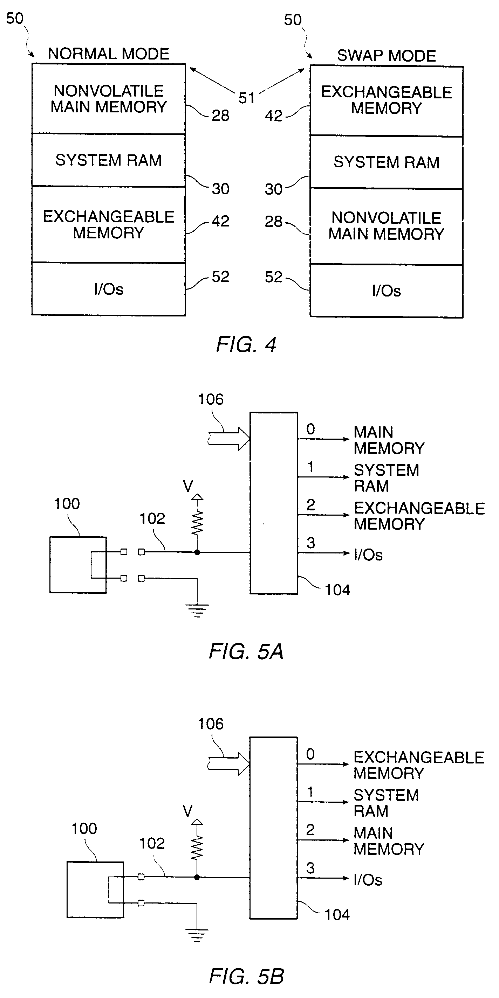

In a specific embodiment, the system operates using two different addressing modes. As shown in Fig. 4, in normal addressing mode, the memory space occupied by main memory 28 occupies a first portion of CPU memory space 50 and contains absolute address 51 from which the CPU begins executing code. In swap addressing mode, the positions of the memory spaces occupied by main memory 28 and exchangeable memory 42 are reversed, with exchangeable memory 42 occupying the portion of memory space 50 previously occupied by main memory 28. Thus, instead of normal operation as described above, the system begins with the CPU executing code from exchangeable memory 42, which, during swap addressing mode, includes absolute address 51. Switching addressing modes from one to the other is accomplished by switching means 46 (Fig. 1) which may be implemented in a variety of ways. In one embodiment, a hardware jumper wire may be employed. In another, a hardware signal may effect the change.

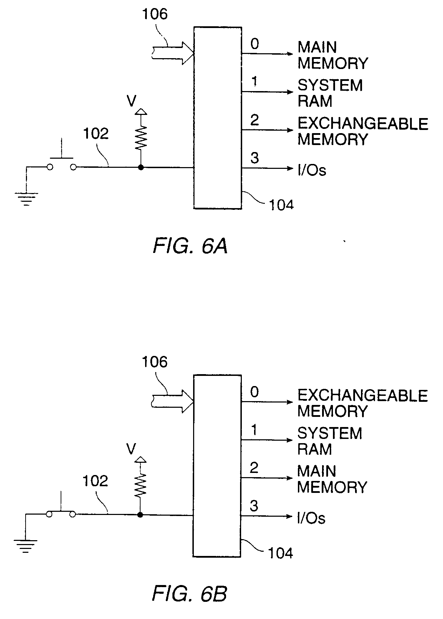

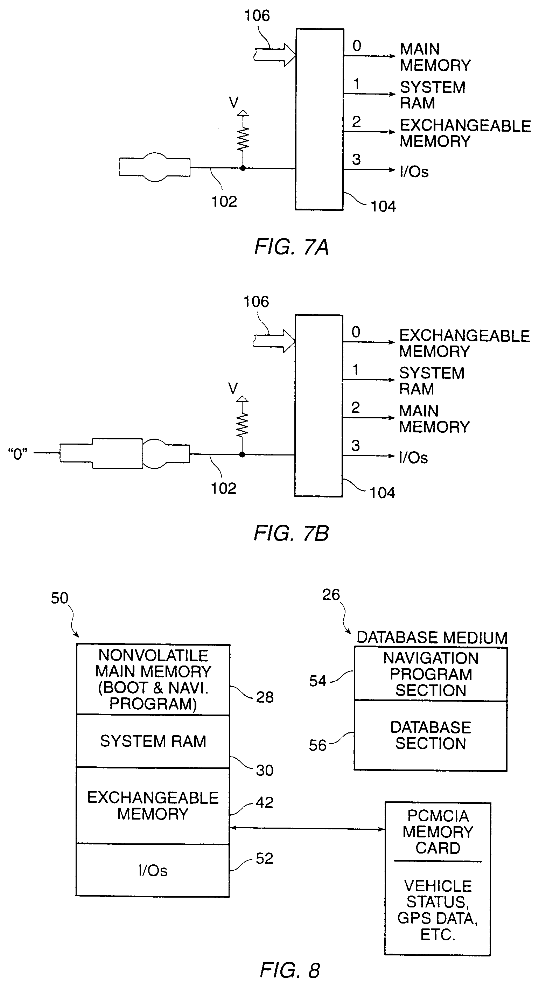

Figs. 5A and 5B show a simple block diagram of a one implementation of switching means 46 which employs a hardware jumper 100 to switch a mode control signal line 102 between a voltage V and ground. The mode control signal line is used as an input to an address decoder circuit 104 which swaps the address location of the main memory and the exchangeable memory when hardware jumper 100 is connected as shown in Fig. 5B. Address decoder 104 receives address and control signals from the system CPU (not shown) via bus 106. Figs. 6A and 6B show a block diagram of another implementation of switching means 46 which employs a manual switch 110 to switch mode control signal line 102 between V and ground. Fig. 6B shows the memory swap when switch 110 is closed. Finally, Figs. 7A and 7B show a block diagram of a configuration which employs a hardware signal to mode control signal line 102, switching it between ground (logic "0") and V (logic "1") to effect the memory swap.

Both addressing modes suppon different modes of operation. Normal addressing mode supports normal operation during which the system navigates using the navigation software stored in main memory 28. Normal addressing mode also supports a data logging mode (Fig. 8) in which various types of data may be tabulated and stored in exchangeable memory 42. According to one embodiment, while the CPU is executing the navigation software in main memory 28, the navigation software is also gathering data regarding, for example, vehicle status, GPS information, or any other type of information related to system operation. The data is then stored in removable PCMCIA memory card 42. In specific embodiments, data logging may be enabled by a variety of means including those discussed above with regard to the memory swap.

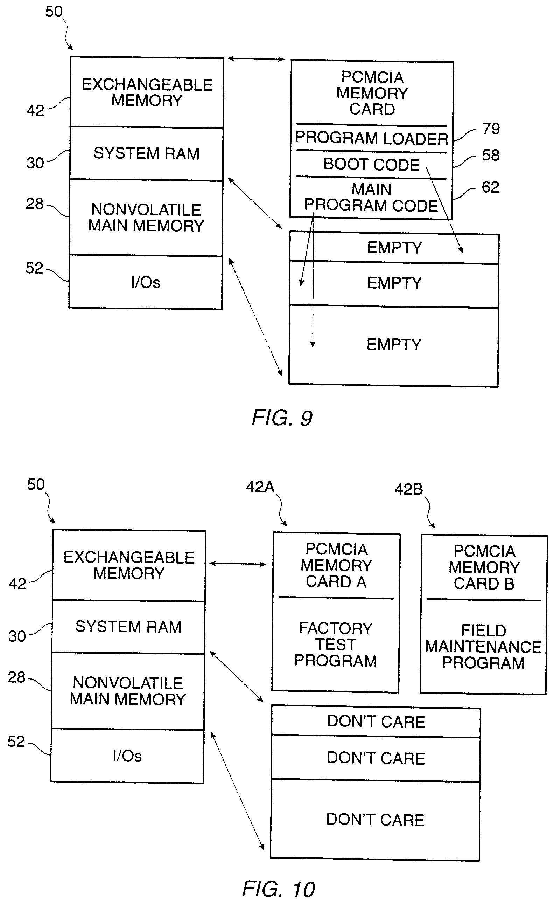

Swap addressing mode supports several different operational modes. Fig. 9 illustrates an operation mode by which the boot code and main program code are initially loaded into main memory 28. After the memory is placed in swap addressing mode, the CPU begins to execute from removable memory card 42 which contains a program loader routine 79 and both boot code 58 and main program code 62. At this point main memory 28 is empty. Through execution of program loader 79, the CPU copies boot code 58 and main program code 62 to main memory 28.

Another operational mode supported by the swap addressing mode is a diagnostic or testing mode (Fig. 10). Different memory cards 42 containing different test programs may be employed depending upon the test environment or the type of testing to be performed. For example memory card 42A may be employed in a manufacturing environment while memory card 42B would be intended for use in the field. Main memory 28 may be ignored in this operation mode. That is, sometimes the system may operate according to code in a memory card 42 entirely without reference to main memory 28. In other instances, information stored in memory card 42 may be used in conjunction with code in main memory 28. Various means may be employed to disable the swap addressing mode unless a memory card 42 is present in the PCMCIA slot 44 (Fig. 1).

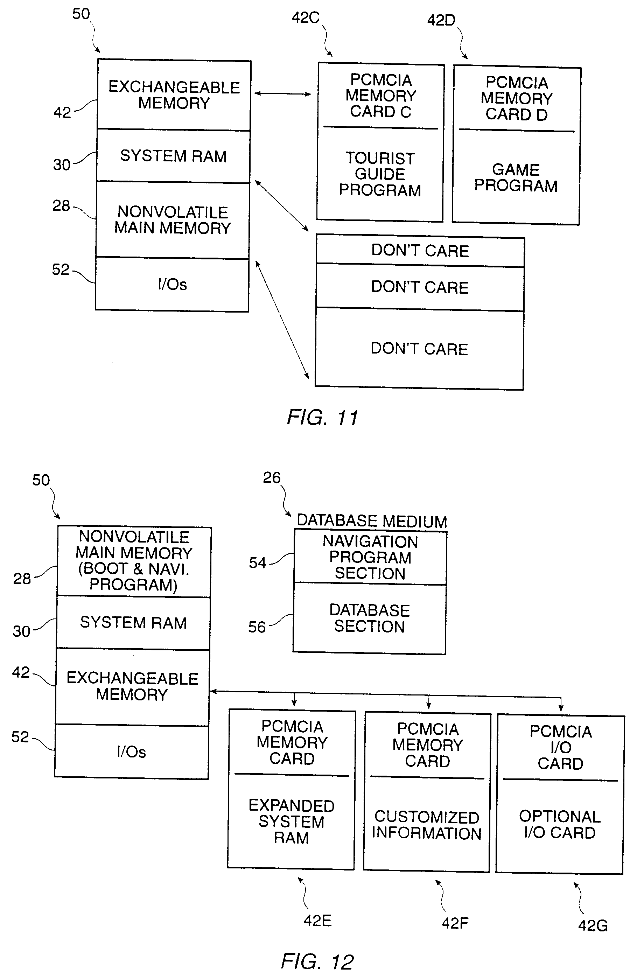

A further operational mode supported by the swap addressing mode is a mode in which non-navigation software stored in exchangeable memory 42 is executed (Fig. 11). This mode is operationally similar to the diagnostic mode described above. Different memory cards 42 may be employed to run different software. For example, memory card 42C may contain a tourist guide program which might contain information regarding tourist attractions, accommodations, or restaurants in a particular geographic area. Memory card 42D may contain, for example, a game program. It will be understood that many different types of software may be run on such a system.

An enhanced navigation mode supported by normal addressing mode is illustrated in Fig. 12. To provide the system with added functionality during normal operation, additional PCMCIA cards 42E-42G may be added at interface slot 44 (Fig. 1) These additional cards would occupy portions of exchangeable memory space 42. According to this embodiment, several kinds of functionality may be added to the system. For example, memory card 42E comprising additional system RAM may be added thereby upgrading system performance with regard to such parameters as route calculation time or boot-up time. Memory card 42F may be added providing memory for a variety of applications. Such applications might include, for example, optional system memory for additional functions such as a memo pad function; or additional database storage space for additional user information such as customized destination lists, phone book, or preferred road/route information. Memory card 42G comprising memory for expanded system I/O may also be added. Such expanded I/O might include, for example, a modem interface or a radio communication interface. Any combination of such memory cards may be employed according to various embodiments of the invention.

While the invention has been particularly shown and described with reference to specific embodiments thereof, it will be understood by those skilled in the art that the foregoing and other changes in the form and details may be made therein without departing from the spirit or scope of the invention.

## Claims

1. A vehicle navigation system, comprising:
a central processing unit (CPU) having a CPU memory space, the CPU being operable to begin executing code at an absolute address within the CPU memory space;
a primary memory coupled to the CPU, the primary memory occupying a first memory space within the CPU memory space, the first memory space including the absolute address;
a removable secondary memory, the secondary memory occupying a second memory space within the CPU memory space;
an interface coupled to the CPU to which the secondary memory is removably coupled, the interface being for facilitating communication between the CPU and the secondary memory; and
means for switching the first and second memory spaces within the CPU memory space so that the second memory space includes the absolute address.

2. The vehicle navigation system of claim 1 wherein the primary memory is for storing a first navigation code, the system further comprising a database medium coupled to the CPU for storing a map database and an upgraded navigation code, wherein the first navigation code is replaced in the primary memory with the upgraded navigation code from the database medium when the vehicle navigation system is booted up and the first navigation code differs from the upgraded navigation code.

3. The vehicle navigation system of claim 2 wherein the database medium comprises a hard disk memory card removably coupled to the CPU via the interface.

4. The vehicle navigation system of claim 2 wherein the database medium comprises non-volatile memory.

5. The vehicle navigation system of claim 2 wherein the database medium comprises CD-ROM.

6. The vehicle navigation system of claim 1 wherein the primary memory is for storing a first navigation code, the system further comprising a database medium coupled to the interface for storing a map database and an upgraded navigation code, wherein a user of the vehicle navigation is presented with an option to replace the first navigation code with the upgraded navigation code when the vehicle navigation system is booted up and the first navigation code differs from the upgraded navigation code.

7. The vehicle navigation system of claim 6 wherein the database medium comprises a hard disk memory card removably coupled to the CPU via the interface.

8. The vehicle navigation system of claim 6 wherein the database medium comprises non-volatile memory.

9. The vehicle navigation system of claim 6 wherein the database medium comprises CD-ROM.

10. The vehicle navigation system of claim 1 wherein the primary memory comprises non-volatile memory.

11. The vehicle navigation system of claim 10 wherein the non-volatile memory comprises memory taken from the group consisting of flash memory, ferro-electric random access memory (FRAM), static RAM, dynamic RAM, and pseudo RAM.

12. The vehicle navigation system of claim 1 wherein the removable secondary memory comprises a PCMCIA memory card.

13. The vehicle navigation system of claim 1 wherein the removable secondary memory comprises memory for storing diagnostic code for testing of the vehicle navigation system.

14. The vehicle navigation system of claim 1 wherein the removable secondary memory comprises memory for storing the first navigation code for loading into the primary memory.

15. The vehicle navigation system of claim 1 wherein the removable secondary memory comprises memory for storing optional navigation software for use in conjunction with first navigation code stored in the primary memory.

16. The vehicle navigation system of claim 1 wherein the removable secondary memory comprises random access memory (RAM) for expanding system RAM.

17. The vehicle navigation system of claim 1 wherein the removable secondary memory comprises an I/O device for supporting expanded I/O functions.

18. The vehicle navigation system of claim 1 wherein the CPU has access to the secondary memory space even where the switching means has not been employed to switch the first and second memory spaces.

19. The vehicle navigation system of claim 18 wherein the secondary memory comprises a data logging device.

20. The vehicle navigation system of claim 19 wherein the data logging device logs data taken from the group consisting of navigational data, hardware data, and production line data.
